# EUROPÄISCHE PATENTANMELDUNG

(11) **EP 4 197 320 A1**
(43) Veröffentlichungstag der Anmeldung: **21.06.2023**
(21) Anmeldenummer: 22212627.8
(22) Anmeldetag: 09.12.2022
(51) Int. Cl.: A01K 5/00, A01K 5/02

(54) **FUTTERMISCHER MIT EINEM MISCHBEHÄLTER FÜR FUTTERMITTEL UND MINDESTENS EINEM ZUSATZBEHÄLTER FÜR FUTTERERGÄNZUNGSMITTEL**

(30) Priorität: 13.12.2021 DE 102021132813
(71) Anmelder: Mayer Verwaltungs GmbH & Co. KG, 84529 Tittmoning (DE)
(72) Erfinder: Richard, Vogt, 34399 Wesertal (DE)
(74) Vertreter: Flach Bauer & Partner Patentanwälte mbB

(57) **Zusammenfassung**

Ein Futtermischer weist einen Mischbehälter (2) zum Mischen von Futtermitteln, mindestens einen Zusatzbehälter (8) zum Aufnehmen eines Futterergänzungsmittels und eine Futtermittel-Wiegeeinrichtung zum Wiegen des in den Mischbehälter (2) eingefüllten Futtermittels auf. Weiterhin weist der Futtermischer zusätzlich zur Futtermittel-Wiegeeinrichtung des Mischbehälters (2) eine Futterergänzungsmittel-Wiegeeinrichtung (10) zum Wiegen des im Zusatzbehälter (8) eingefüllten Futterergänzungsmittels auf.

## Beschreibung

Die Erfindung betrifft einen Futtermischer, insbesondere einen Futtermischwagen, mit einem Mischbehälter zum Mischen von Futtermitteln und mit mindestens einem Zusatzbehälter zum Aufnehmen eines Futterergänzungsmittels gemäß dem Oberbegriff des Anspruchs 1.

In der Landwirtschaft sind Futtermischer in der Form von Futtermischwagen oder stationären Futtermischern bekannt, mit denen Futtermittel für Rinder gemischt werden kann. Der Hauptanteil des Futtermittels besteht dabei aus einem Grundfutter wie Grassilage, Maissilage, Heu oder Stroh, das im Mischbehälter beispielsweise mittels einer oder mehrerer Vertikalmischschnecken gemischt wird.

Die gewünschte Menge an Grundfutter wird üblicherweise von oben her in den Mischbehälter eingefüllt. Mit einer Futtermittel-Wiegeeinrichtung kann dabei das Gewicht und damit die Menge des sich im Mischbehälter befindenden Futtermittels ermittelt und angezeigt werden. Eine derartige Futtermittel-Wiegeeinrichtung kann beispielsweise aus Messzellen bestehen, die die Zunahme des Mischbehältergewichts beim Einfüllen des Futtermittels messen.

Diese Futtermittel-Wiegeeinrichtung muss für die Messung sehr hoher Gewichtskräfte von in der Regel vielen Tonnen ausgelegt sein, da für derartige Futtermischer üblicherweise großvolumige Mischbehälter verwendet werden, die beispielsweise zwischen 5 m³ und 80 m³ Futtermittel aufnehmen können. Die Messgenauigkeit derartiger Futtermittel-Wiegeeinrichtungen ist daher in der Regel auf ca. ± 5 kg begrenzt.

Für eine gute Milchleistung und für die Gesundheit der Rinder ist eine ausgewogene und an die speziellen Anforderungen der Rinder optimal angepasste Futtermittelzusammensetzung entscheidend. Hierzu werden dem Grundfutter häufig Futterergänzungsmittel wie Mineralstoffe, Kraftfutter oder Vitamine zugesetzt. Derartige Futterergänzungsmittel können auch dazu dienen, den Methanausstoß der Rinder zu reduzieren.

Derartige Futterergänzungsmittel werden in der Regel in kleinen Mengen zugegeben und nehmen vom Gewicht her nur einen kleinen Teil des Gesamtgewichts des zu mischenden Futters ein. Dies ist insbesondere bei Futterergänzungsmitteln mit hochkonzentrierten Inhaltsstoffen der Fall. Derartige Futterergänzungsmittel müssen daher wesentlich genauer als das Grundfutter gewogen und dem Grundfutter möglichst gleichmäßig zudosiert werden.

Futtermittel-Wiegeeinrichtungen, mit denen das gesamte, sich im Mischbehälter befindende Futtermittel gewogen wird, sind aufgrund ihrer Auslegung für sehr hohe Gewichte jedoch nicht in der Lage, Futterergänzungsmittel, die in relativ geringen Mengen und mit vergleichsweise geringem Gewicht zugegeben werden, mit der erforderlichen Genauigkeit zu wiegen. Futterergänzungsmittel werden daher häufig mittels einer externen Waage abgewogen, bevor sie dem Mischbehälter zugegeben und mit dem Grundfutter vermischt werden. Dies ist jedoch umständlich und zeitaufwendig.

Der Erfindung liegt daher die Aufgabe zugrunde, einen Futtermischer zu schaffen, mit dem die Zugabe von Futterergänzungsmitteln zum Grundfutter auf möglichst genaue und einfache Weise erfolgen kann.

Diese Aufgabe wird erfindungsgemäß durch einen Futtermischer mit den Merkmalen des Anspruchs 1 gelöst. Vorteilhafte Ausführungsformen der Erfindung sind in den weiteren Ansprüchen beschrieben.

Gemäß der Erfindung weist der Futtermischer zusätzlich zur Futtermittel-Wiegeeinrichtung des Mischbehälters eine Futterergänzungsmittel-Wiegeeinrichtung zum Wiegen des im Zusatzbehälter eingefüllten Futterergänzungsmittels auf.

Eine derartige Futterergänzungsmittel-Wiegeeinrichtung kann an die spezifischen Dosieranforderungen des Futterergänzungsmittels optimal angepasst sein und insbesondere eine Messgenauigkeit aufweisen, die wesentlich höher als diejenige der Futtermittel-Wiegeeinrichtung des Mischbehälters ist. Das Gewicht und damit die Menge des Futterergänzungsmittels, das dem Grundfutter zugemischt werden soll, kann damit direkt am Futtermischer auf wesentlich genauere Weise als über die Futtermittel-Wiegeeinrichtung des Mischbehälters ermittelt werden. Ein vorheriges Abwiegen des Futterergänzungsmittels mittels einer externen, gesonderten Waage ist damit nicht mehr erforderlich. Das genaue Wiegen und Zudosieren der Futterergänzungsmittel erhöht die Futtereffizienz, vermindert die Gefahr einer Unter- oder Überversorgung der Tiere, trägt zur Gesunderhaltung der Tiere bei, kann den Methanausstoß der Tiere bestmöglich vermindern und reduziert die Kosten für den Landwirt.

Vorzugsweise liegt die Messungenauigkeit der Futterergänzungsmittel-Wiegeeinrichtung bei weniger als 0,5 kg, besonders vorzugsweise bei weniger als 0,2 kg, insbesondere bei weniger als 0,1 kg.

Gemäß einer vorteilhaften Ausführungsform ist der Zusatzbehälter getrennt vom Mischbehälter angeordnet, derart, dass das Gewicht des sich im Zusatzbehälter befindenden Futterergänzungsmittels unabhängig vom Gewicht des sich im Mischbehälter befindenden Futtermittels messbar ist. Dies kann vorzugsweise dadurch realisiert werden, dass der Zusatzbehälter an einer die Futterergänzungsmittel-Wiegeeinrichtung aufweisenden Halterung befestigt ist, wobei die Futterergänzungsmittel-Wiegeeinrichtung Messelemente umfasst, die eine vom Füllgewicht des Zusatzbehälters abhängige Verformung oder Belastung der Halterung messen.

Bei den Messelementen kann es sich beispielsweise um Dehnungsmessstreifen oder Messelemente handeln, die eine Lageabweichung oder Verformung der Halterung auf kapazitive Weise erfassen.

Gemäß einer vorteilhaften Ausführungsform weist der Zusatzbehälter eine von einer elektronischen Steuereinrichtung des Futtermischers ansteuerbare Verschließeinrichtung auf, die in Abhängigkeit der von der Futterergänzungsmittel-Wiegeeinrichtung erzeugten Gewichtssignale geöffnet und geschlossen werden kann, derart, dass eine vorbestimmte Menge an Futterergänzungsmittel aus dem Zusatzbehälter abführbar und in den Mischbehälter überführbar ist. Auf diese Weise kann dem Grundfutter durch automatisches Öffnen und Schließen der Verschließeinrichtung die gewünschte Menge an Futterergänzungsmittel zugemischt werden, unabhängig davon, ob in den Zusatzbehälter genau die gewünschte Menge an zuzumischendem Futterergänzungsmittel oder eine größere Menge eingefüllt worden ist.

Vorteilhafterweise ist die Verschließeinrichtung im Bodenbereich des Zusatzbehälters angeordnet, derart, dass das Futterergänzungsmittel durch Schwerkraft aus dem Zusatzbehälter ausströmen kann.

Gemäß einer vorteilhaften Ausführungsform weist der Futtermischer eine Futterergänzungsmittel-Fördereinrichtung mit einer Rohr- oder Schlauchleitung auf, die sich vom Zusatzbehälter in den Mischbehälter hinein erstreckt. Die Rohr- oder Schlauchleitung kann sich dabei insbesondere vom Zusatzbehälter über einen oberen Rand des Mischbehälters erstrecken oder in eine seitliche Wandöffnung des Mischbehälters münden. Auf diese Weise kann der Zusatzbehälter an beliebigen Stellen des Futtermischers angeordnet sein und das Futterergänzungsmittel an anderen Stellen und insbesondere derart gezielt in den Mischbehälter eingeleitet werden, dass eine gleichmäßige Durchmischung des Futtermittels erfolgt.

Alternativ hierzu ist es jedoch auch möglich, den Zusatzbehälter in direkter Nachbarschaft zum Mischbehälter oder oberhalb des Mischbehälters derart anzuordnen, dass das Futterergänzungsmittel allein durch Öffnen einer Verschließeinrichtung, beispielsweise eines Schiebers oder einer Klappe, in den Mischbehälter fällt.

Weiterhin ist es auch möglich, dass sich die Rohr- oder Schlauchleitung bis in einen Bereich oberhalb eines Querförderbandes des Futtermischers erstreckt oder der Zusatzbehälter direkt oberhalb eines derartigen Querförderbandes angeordnet ist, wodurch das Futterergänzungsmittel beim Entleeren des Mischbehälters auf das Grundfutter aufgetragen werden kann.

Der Zusatzbehälter kann auch im Bereich einer Beladeeinrichtung des Futtermischers angeordnet sein, mit der das Grundfutter aufgenommen und in den Mischbehälter transportiert wird. Bei einer derartigen Beladeeinrichtung kann es sich beispielsweise um eine Fräseinrichtung oder Futterschneideinrichtung mit einem daran anschließenden Futterförderkanal oder Transportband handeln.

Gemäß einer vorteilhaften Ausführungsform umfasst die Futterergänzungsmittel-Fördereinrichtung eine Förderschnecke oder einen Druckluft- oder Saugförderer zum Fördern des Futterergänzungsmittels vom Zusatzbehälter in den Mischbehälter oder in den Bereich oberhalb des Querförderbandes.

Die Futterergänzungsmittel-Fördereinrichtung kann in Abhängigkeit der von der Futterergänzungsmittel-Wiegeeinrichtung erzeugten Gewichtssignale deaktivierbar sein. Die Futterergänzungsmittel-Fördereinrichtung kann damit von der elektronischen Steuereinrichtung derart angesteuert werden, dass die Zufuhr von Futterergänzungsmittel zum Grundfutter automatisch gestoppt wird, wenn die gewünschte Menge an Futterergänzungsmittel aus dem Zusatzbehälter abgeführt worden ist.

Gemäß einer vorteilhaften Ausführungsform steht die elektronische Steuereinrichtung mit einer Anzeigeeinrichtung zum Anzeigen des Gewichts des sich im Mischbehälter befindenden Futtermittels und des sich im Zusatzbehälter befindenden Futterergänzungsmittels in Verbindung. Hierdurch kann der Landwirt durch die Anzeigeeinrichtung, die zweckmäßigerweise aus einem Monitor besteht, laufend über die Soll- und Istgewichte des Futtermittels im Mischbehälter und des Futterergänzungsmittels im Zusatzbehälter informiert werden.

Gemäß einer vorteilhaften Ausführungsform sind mehrere Zusatzbehälter, beispielsweise zwei bis sechs Zusatzbehälter, über den Umfang des Mischbehälters verteilt angeordnet. Hierdurch ist es möglich, für unterschiedliche Futterergänzungsmittel jeweils einen eigenen Zusatzbehälter zu verwenden und die unterschiedlichen Futterergänzungsmittel getrennt zu wiegen. Weiterhin kann dadurch eine gleichmäßigere Verteilung des Futterergänzungsmittels im Mischbehälter erreicht werden. Dies ist insbesondere bei großen Futtermischern mit langen Mischbehältern und mehreren Mischwerkzeugen, insbesondere Mischschnecken, von Bedeutung.

Die Erfindung wird nachfolgend anhand der Zeichnungen beispielhaft näher erläutert. Es zeigen:
- Figur 1:: einen erfindungsgemäßen Futtermischer in der Form eines Futtermischwagens schräg von oben, wobei die Mischschnecken der Übersichtlichkeit halber nicht dargestellt sind,
- Figur 2:: einen Ausschnitt eines Teils des Futtermischwagens von Figur 1 schräg von unten,
- Figur 3:: eine teilweise geschnittene Seitenansicht eines Zusatzbehälters und eines Abschnitts einer Futterergänzungsmittel-Fördereinrichtung,
- Figur 4:: eine teilweise geschnittene Seitenansicht eines Zusatzbehälters und einer Verschließeinrichtung zum Öffnen und Schließen des Zusatzbehälters,
- Figur 5:: einen größtenteils schematischen, vorderen Abschnitt des Futtermischwagens von Figur 1 mit einem im Bereich einer Fräseinrichtung angeordneten Zusatzbehälter, und
- Figur 6:: einen Abschnitt einer Fahrerkabine mit einer Anzeigeeinrichtung zum Anzeigen der Gewichte des sich im Mischbehälter befindenden Futtermittels und des sich im Zusatzbehälter befindenden Futterergänzungsmittels.

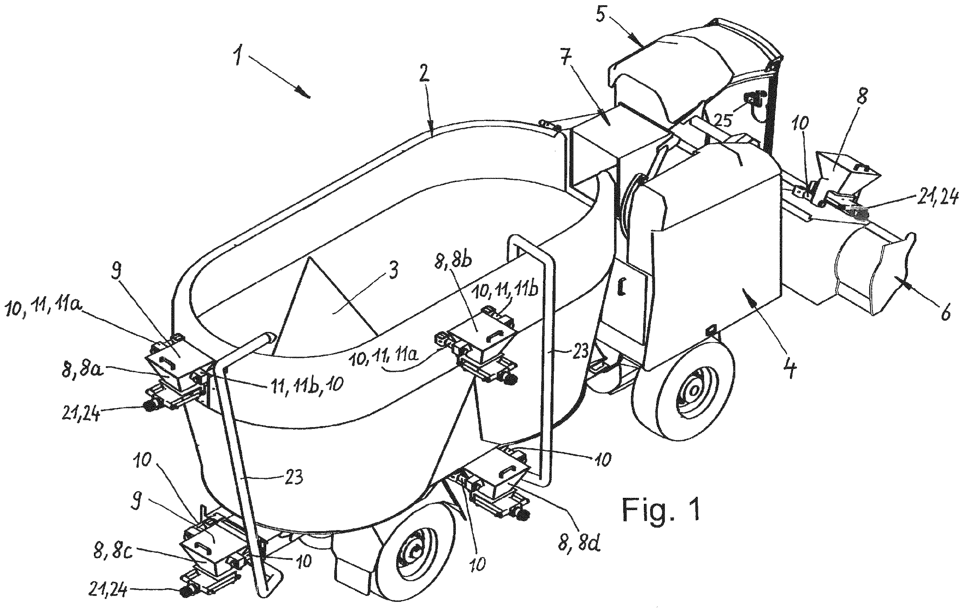

In Figur 1 ist ein Futtermischer in Form eines Futtermischwagens 1 dargestellt, der als Selbstfahrer, d. h. mit einem eigenen Fahr- und Mischantrieb, ausgestattet ist. Die Erfindung ist jedoch nicht auf derartige Selbstfahrer beschränkt, sondern ist auch bei gezogenen Futtermischwägen (Trailer) und bei stationären Futtermischern anwendbar.

Der Futtermischwagen 1 umfasst einen oben offenen Mischbehälter 2, in dem Futtermittel in der Form von Grundfutter wie beispielsweise Grassilage, Maissilage, Heu oder Stroh, und ein oder mehrere Futterergänzungsmittel wie beispielsweise Mineralstoffe, Kraftfutter oder Vitamine, aufgenommen und gemischt werden können.

Die sich im Mischbehälter 2 befindenden Mischwerkzeuge sind in Figur 1 nicht dargestellt. Bei dem gezeigten Ausführungsbeispiel bestehen die Mischwerkzeuge aus zwei Mischschnecken mit vertikaler Drehachse, wobei eine Mischschnecke in der vorderen Hälfte des Mischbehälters 2 und die andere Mischschnecke in der hinteren Hälfte des Mischbehälters 2 angeordnet ist. Der Mischbehälter 2 umfasst daher einen vorderen und einen hinteren Mischraum.

Zwischen den beiden Mischräumen befinden sich gegenüberliegende Futterleitkeile 3, die von den Seitenwänden des Mischbehälters 2 in das Innere des Mischbehälters 2 hinein vorragen und verhindern, dass Futtermittel in den von den Vertikalschnecken nicht überdeckten Bereichen liegen bleibt.

Andere Mischbehälter 2 und Mischwerkzeuge sind ohne weiteres möglich. Beispielsweise können im Mischbehälter 2 nur ein Mischwerkzeug oder mehr als zwei Mischwerkzeuge angeordnet sein.

Der dargestellte Mischbehälter 2 ist an seinem vorderen Ende mit einem Antriebsaggregat 4 zum Antreiben der Mischwerkzeuge und für den Fahrantrieb des Futtermischwagens 1 verbunden. Am Antriebsaggregat 4 ist eine Fahrerkabine 5 angeordnet.

Weiterhin weist der Futtermischwagen 1 beim gezeigten Ausführungsbeispiel eine Beladevorrichtung auf, die eine Fräse 6 zum Fräsen und Aufnehmen von Grundfutter, beispielsweise aus einem Silagestock, umfasst, wobei die Fräse 6 in bekannter Weise in vertikaler Richtung verfahren werden kann. Das von der Fräse 6 aufgenommene Grundfutter wird über einen Futterförderkanal 7 dem Mischbehälter 2 zugeführt.

Werden Futtermischwagen verwendet, die über keine eigene Beladevorrichtung verfügen, wird das Grundfutter üblicherweise über ein separates Fahrzeug, beispielsweise mittels eines Traktors mit Frontlader, oder mittels einer anderen separaten Befüllvorrichtung von oben her in den Mischbehälter 2 eingefüllt.

Der Futtermischwagen 1 weist eine nicht näher dargestellte Futtermittel-Wiegeeinrichtung auf, mit der das sich im Mischbehälter 2 befindende Futtermittel gewogen werden kann. Eine derartige Futtermittel-Wiegeeinrichtung kann, wie bekannt, aus mehreren Wägezellen bestehen, die mit am Fahrgestell angeordneten Auflageelementen zusammenwirken, auf denen der Mischbehälter 2 gelagert ist. Bekannte Wägezellen dieser Art arbeiten beispielsweise mit Dehnungsmeßstreifen oder erfassen auf kapazitive Weise eine Lageabweichung oder Verformung der Auflageelemente.

Aufgrund des hohen Gewichts des Mischbehälters 2 und des sich darin befindenden Futtermittels von beispielsweise 5 m³ bis 80 m³ muss diese Futtermittel-Wiegeeinrichtung für hohe Gewichte von in der Regel vielen Tonnen ausgebildet sein. Übliche Futtermittel-Wiegeeinrichtungen dieser Art haben daher meist eine Messungenauigkeit von +/- 5 kg oder sogar mehr.

Der Futtermischwagen 1 weist ferner mehrere, im vorliegenden Ausführungsbeispiel vier, Zusatzbehälter 8 zur Aufnahme von Futterergänzungsmittel, beispielsweise Mineralstoffe, hochkonzentriertes Kraftfutter oder Vitamine, auf. Derartige Futterergänzungsmittel nehmen mengen-und gewichtsmäßig einen wesentlich kleineren Anteil am fertig gemischten Futtermittel ein als das Grundfutter. Die Zusatzbehälter 8 sind daher wesentlich kleiner als der Mischbehälter 2 ausgebildet und können beispielsweise nur bis zu 100 kg Futterergänzungsmittel aufnehmen.

Im gezeigten Ausführungsbeispiel sind zwei obere Zusatzbehälter 8a, 8b an der Außenseite und in einem oberen Bereich des Mischbehälters 2 befestigt. Zwei untere Zusatzbehälter 8c, 8d sind unterhalb des Mischbehälters 2 am Fahrgestell des Futtermittelwagens 1 befestigt. Die Zusatzbehälter 8b, 8d sind in Längsrichtung des Mischbehälters 2 mittig angeordnet, während die Zusatzbehälter 8a, 8c am hinteren Ende des Mischbehälters 2 bzw. des Fahrgestells angeordnet sind.

Die Zusatzbehälter 8 sind trichterförmig ausgebildet, wobei die Seitenwände der Zusatzbehälter 8 nach unten schräg aufeinander zulaufen. Andere Formen von Zusatzbehältern sind ohne weiteres möglich. Vorzugsweise sind die Zusatzbehälter 8, wie dargestellt, mittels einer oberen Klappe 9 verschließbar. Bei geöffneter Klappe 9 können die Zusatzbehälter 8 von oben her mit Futterergänzungsmittel befüllt werden.

Das Gewicht des in jeden Zusatzbehälter 8 eingefüllten Futterergänzungsmittels kann jeweils unabhängig von der Futtermittel-Wiegeeinrichtung des Mischbehälters 2 über eine eigene Futterergänzungsmittel-Wiegeeinrichtung 10 gewogen werden, die jedem Zusatzbehälter 8 zugeordnet und in den Figuren 1 bis 4 lediglich schematisch dargestellt ist.

Die Futterergänzungsmittel-Wiegeeinrichtungen 10 weisen eine wesentlich höhere Messgenauigkeit als die Futtermittel-Wiegeeinrichtung des Mischbehälters 2 auf. Vorzugsweise ist die Messungenauigkeit kleiner als 0,5 kg, besonders vorzugsweise kleiner als 0,2 kg, insbesondere kleiner als 0,1 kg. Auf diese Weise können auch Klein- und Kleinstmengen an Futterergänzungsmitteln genau gewogen werden.

Vorzugsweise ist die Futterergänzungsmittel-Wiegeeinrichtung 10 in eine Halterung 11 integriert, mit denen der jeweilige Zusatzbehälter 8 am Mischbehälter 2 bzw. am Fahrgestell befestigt ist. Beispielsweise ist es möglich, den Zusatzbehälter 8 als separates Bauteil auszubilden und über beidseits des Zusatzbehälters 8 verlaufende Haltearme 11a, 11b am Mischbehälter 2 oder am Fahrgestell zu lagern und mittels Dehnungsmessstreifen, die an den Haltearmen 11a, 11b angeordnet sind, die gewichtsabhängige Verformung der Haltearme 11a, 11b beim Einfüllen des Futterergänzungsmittels zu messen.

Andere Arten von Futterergänzungsmittel-Wiegeeinrichtungen 10 sind ohne weiteres möglich, beispielsweise Wiegeeinrichtungen, welche eine Lageabweichung oder Verformung der Halterung 11 auf kapazitive Weise erfassen oder die mittels einer elektromagnetischen Kraftkompensation arbeiten.

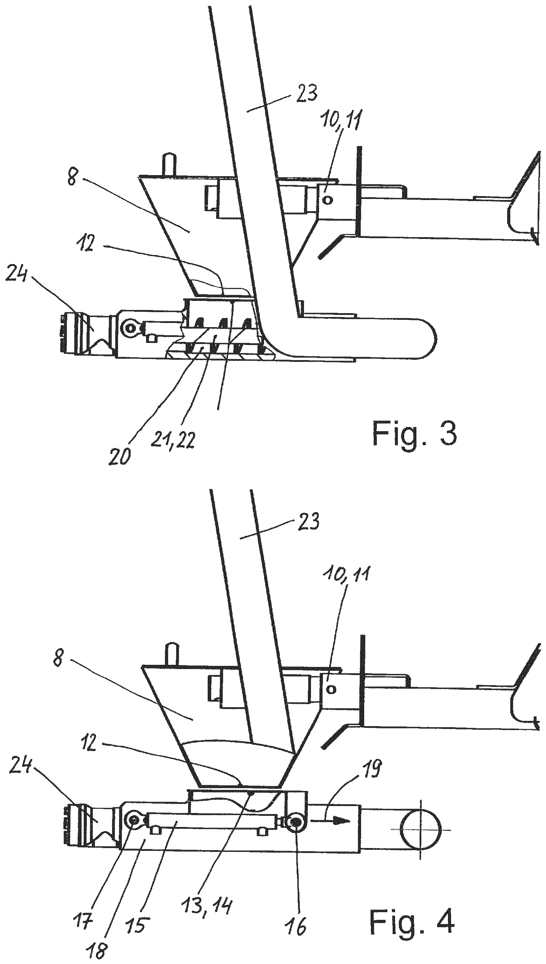

In den Figuren 3 und 4 ist schematisch die Art und Weise dargestellt, wie das Futterergänzungsmittel von einem Zusatzbehälter 8, bei dem es sich um einen der unteren Zusatzbehälter 8c oder 8d handelt, in den Mischbehälter 2 gefördert werden kann, um dort mit dem Grundfutter vermischt zu werden.

Wie aus Figur 4 ersichtlich, kann eine Entleeröffnung 12 am unteren Ende des Zusatzbehälters 8 mittels eines Schiebers 13, der Teil einer Verschließeinrichtung 14 ist, geöffnet und geschlossen werden. In Figur 4 ist der Schieber 13 in seiner geschlossenen Position dargestellt.

Die Verschließeinrichtung 14 umfasst ferner beim gezeigten Ausführungsbeispiel einen hydraulisch, pneumatisch oder elektrisch betätigbaren Hubzylinder 15, der an einem Ende 16 mit dem Schieber 13 und am anderen Ende 17 mit einem Halteelement 18 gekoppelt ist, das fest mit dem Fahrgestell verbunden ist. Durch Ausfahren des Hubzylinders 15 wird der Schieber 13 nach rechts in Richtung des Pfeils 19 bewegt, wodurch die Entleeröffnung 12 des Zusatzbehälters 8 geöffnet wird.

Anstelle eines derartigen Hubzylinders können ohne weiteres auch andere Antriebe verwendet werden, beispielsweise Zahnstangenantriebe oder elektrische Antriebe.

Bei geöffnetem Schieber 13 fällt das sich im Zusatzbehälter 8 befindende Futterergänzungsmittel in einen darunter angeordneten Förderraum 20 einer Futterergänzungsmittel-Fördereinrichtung 21. Von diesem Förderraum 20 aus kann das Futterergänzungsmittel dann beispielsweise mittels einer Förderschnecke 22 über eine Rohr-oder Schlauchleitung 23 zum Grundfutter gefördert werden. Die Förderschnecke 22 kann beispielsweise mittels eines Elektro- oder Hydraulikmotors 24 angetrieben, d. h. in Umdrehung versetzt werden.

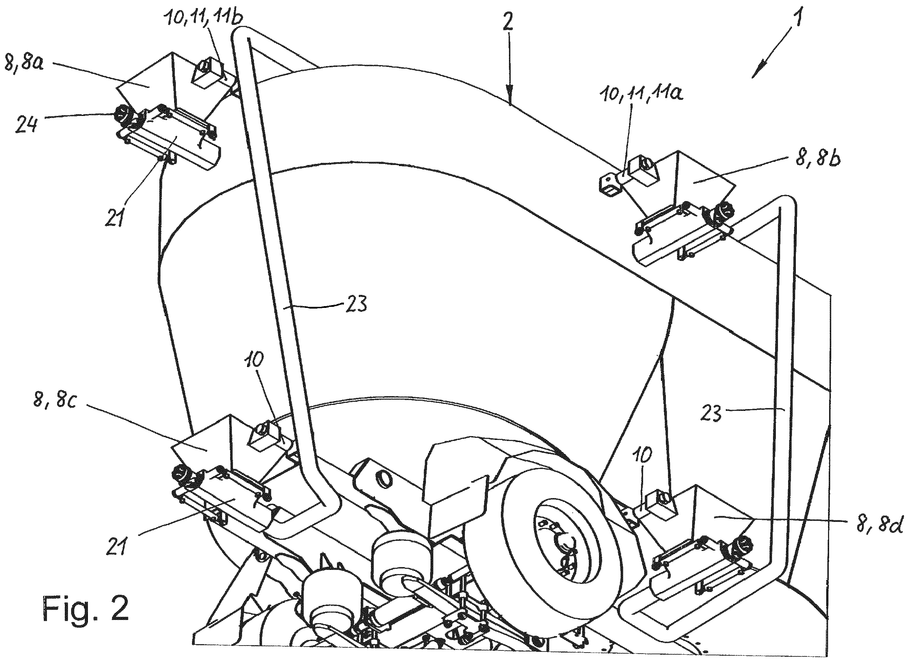

Bei dem in den Figuren 1 und 2 gezeigten Ausführungsbeispiel erstrecken sich die Rohr- oder Schlauchleitungen 23 nach oben über den oberen Rand des Mischbehälters 2, so dass das Futterergänzungsmittel von oben her auf das sich im Mischbehälter 2 befindende Grundfutter geleitet werden kann.

Es ist auch möglich, eine Rohr- oder Schlauchleitung 23 vom Zusatzbehälter 8 in einen Raum oberhalb eines nicht dargestellten Querförderbandes zu führen, um das Futterergänzungsmittel beim Entleeren des Mischbehälters 2 auf das sich auf dem Querförderband befindende Futtermittel zu streuen.

Alternativ oder zusätzlich zu einer Mischschnecke 22 sind auch andere Fördereinrichtungen denkbar, beispielsweise Pumpen, Druckluft- oder Saugförderer.

Befindet sich ein Zusatzbehälter 8, wie dies bei den oberen Zusatzbehältern 8a, 8b der Fall ist, in unmittelbarer Nachbarschaft des Mischbehälters 2, sind keine längeren Rohr- oder Schlauchleitungen 23 erforderlich. In diesem Fall kann der in Figur 3 gezeigte Förderraum 20 direkt in eine Wandöffnung des Mischbehälters 2 münden. Die Verschließeinrichtung 14 und die Fördereinrichtung 21 kann bei den Zusatzbehältern 8a, 8b im Übrigen in gleicher Weise wie bei den Zusatzbehältern 8c, 8d ausgebildet sein.

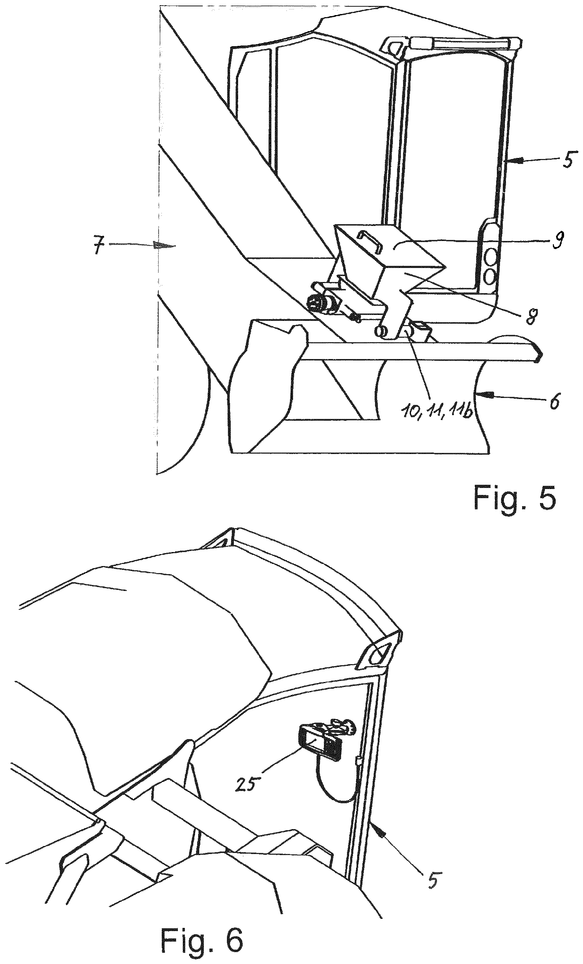

Aus Figur 5 ist ersichtlich, dass ein Zusatzbehälter 8 für Futterergänzungsmittel auch in Nachbarschaft, insbesondere auf, der Fräse 6 oder auf dem Futterförderkanal 7 vorgesehen sein kann. Dieser Zusatzbehälter 8 kann alternativ oder zusätzlich zu den in Nachbarschaft des Mischbehälters 2 angeordneten Zusatzbehältern 8 vorgesehen und in gleicher Weise wie diese ausgebildet sein.

Der in Figur 5 gezeigte Zusatzbehälter 8 wirkt ebenfalls mit einer Futterergänzungsmittel-Wiegeeinrichtung 10, einer Verschließeinrichtung 14 und einer Fördereinrichtung 21 für das Futterergänzungsmittel zusammen, wie im Zusammenhang mit den in den Figuren 1 bis 4 dargestellten Zusatzbehältern 8 beschrieben. Im Unterschied zu dort wird das Futterergänzungsmittel jedoch durch eine Wandöffnung im Bereich der Fräse 6 oder des Futterförderkanals 7 auf das mittels der Fräse 6 aufgenommene Grundfutter geleitet, bevor das Futtermittel über den Futterförderkanal 7 in den Mischbehälter 2 gelangt.

Die von den Futterergänzungsmittel-Wiegeeinrichtungen 10 gemessenen Gewichte der in die einzelnen Zusatzbehälter 8 eingefüllten Futterergänzungsmittel werden in Form entsprechender Gewichtssignale an eine zentrale elektronische Steuereinrichtung, d. h. an einen Zentralcomputer, des Futtermischwagens 1 gesendet und zusammen mit Gewichtssignalen verarbeitet, die von der Futtermittel-Wiegeeinrichtung des Mischbehälters 2 gesendet werden. Mittels einer mit der elektronischen Steuereinrichtung verbundenen, in Figur 6 dargestellten Anzeigeeinrichtung 25 kann das Gewicht der in die Zusatzbehälter 8 eingefüllten Futterergänzungsmittel angezeigt werden.

Die Anzeigeeinrichtung 25 ist bei einem selbstfahrenden Futtermischwagen 1 vorzugsweise in der Fahrerkabine 5 angeordnet. Es ist alternativ oder zusätzlich auch möglich, für jeden Zusatzbehälter 8 eine eigene Anzeigeeinrichtung 25 vorzusehen und diese in Nachbarschaft des jeweiligen Zusatzbehälters 8 anzuordnen. Ferner ist es auch denkbar, die Füllgewichte der Zusatzbehälter 8 auf einer Anzeigeeinrichtung anzuzeigen, die vom Futtermischer getrennt angeordnet ist, beispielsweise auf einem mobilen Anzeigegerät wie einem Smartphone oder Tablet, oder auf einem Anzeigegerät, das an einem Befüllfahrzeug oder in einem vom Mischort entfernten Raum angeordnet ist.

Die genaue Dosierung des Futterergänzungsmittels kann beispielsweise dadurch erfolgen, dass in den jeweiligen Zusatzbehälter 8 genau diejenige Menge an Futterergänzungsmittel eingefüllt wird, die einer Ladung des im Mischbehälter 2 zu mischenden Grundfutters zugemischt werden soll, und dann der Zusatzbehälter 8 während des Mischvorgangs vollständig geleert wird, d. h. der gesamte Inhalt des Zusatzbehälters 8 dem Grundfutter zugeführt wird. In diesem Fall ist es zweckmäßig, wenn das Gewicht des Futterergänzungsmittels beim Einfüllen in den Zusatzbehälter 8 laufend angezeigt und dem Landwirt zusätzlich optisch und/oder akustisch signalisiert wird, wenn das gewünschte Sollgewicht erreicht ist.

Das Entleeren des Zusatzbehälter 8 und Befördern des Futterergänzungsmittels zum Grundfutter erfolgt zweckmäßigerweise durch manuelles Betätigen eines Bedien- oder Eingabeelements, beispielsweise eines Schalters oder einer Taste, wodurch die Verschließeinrichtung 14 mittels der elektronischen Steuereinrichtung derart aktiviert wird, dass die Entleeröffnung 12 des Zusatzbehälter 8 geöffnet wird, wobei dann auch die Fördereinrichtung 21 aktiviert wird, um das Futterergänzungsmittel zum Grundfutter zu fördern.

Weiterhin ist es auch möglich, dass die von der Futterergänzungsmittel-Wiegeeinrichtung 10 an die elektronische Steuereinrichtung übermittelten Gewichtssignale von der elektronischen Steuereinrichtung derart verarbeitet werden, dass beim Entleeren des Zusatzbehälters 8 während des Mischvorgangs die Entleeröffnung 12 des Zusatzbehälter 8 automatisch geschlossen und/oder die Fördereinrichtung 21 abgeschaltet wird, wenn die gewünschte Menge an Futterergänzungsmittel den Zusatzbehälter 8 verlassen hat. In diesem Fall kann in einem Mischbehälter 8 eine größere Menge an Futterergänzungsmittel eingefüllt werden, als für einen Mischvorgang erforderlich ist.

Die von den Futterergänzungsmittel-Wiegeeinrichtungen 10 erzeugten Wiegedaten können einem Dokumentationssystem zugeführt werden, das eine genaue Nachverfolgung der verfütterten Futterergänzungsmittel ermöglicht.

Die dem Grundfutter zuzumischenden Sollmengen bzw. Sollgewichte an Futterergänzungsmittel können als Rezept in der elektronischen Steuereinrichtung gespeichert sein. Die von den Futterergänzungsmittel-Wiegeeinrichtungen 10 gelieferten Gewichtsdaten können dann von der elektronischen Steuereinrichtung 10 mit den Sollgewichten verglichen werden, um die Verschließeinrichtungen 14 und/oder Fördereinrichtungen 21 derart anzusteuern, dass die gewünschten Mengen an Futterergänzungsmittel auf sehr genaue Weise dem Grundfutter zugeführt werden.

Weiterhin ist es auch möglich, die Zusatzbehälter 8 derart auszubilden, dass sie flüssige Zusatzkomponenten wie Wasser oder Melasse aufnehmen können, mit denen das Grundfutter angefeuchtet oder aufgewertet werden soll. Im Rahmen der vorliegenden Erfindung gelten daher derartige flüssige Zusatzkomponenten ebenfalls als Futterergänzungsmittel.

## Patentansprüche

1. Futtermischer mit
- einem Mischbehälter (2) zum Mischen von Futtermitteln, die Grundfutter wie Grassilage, Maissilage, Heu und/oder Stroh, sowie Futterergänzungsmittel wie Mineralstoffe, Kraftfutter und/oder Vitamine umfassen,
- mindestens einem Zusatzbehälter (8) zum Aufnehmen des Futterergänzungsmittels,
- einer Futtermittel-Wiegeeinrichtung zum Wiegen des in den Mischbehälter (2) eingefüllten Futtermittels,
**dadurch gekennzeichnet, dass** der Futtermischer zusätzlich zur Futtermittel-Wiegeeinrichtung des Mischbehälters (2) eine Futterergänzungsmittel-Wiegeeinrichtung (10) zum Wiegen des im Zusatzbehälter (8) eingefüllten Futterergänzungsmittels aufweist, wobei
der Zusatzbehälter (8) eine von einer elektronischen Steuereinrichtung des Futtermischers ansteuerbare Verschließeinrichtung (14) aufweist, die in Abhängigkeit der von der Futterergänzungsmittel-Wiegeeinrichtung (10) erzeugten Gewichtssignale geöffnet und geschlossen werden kann, derart, dass eine vorbestimmte Menge an Futterergänzungsmittel aus dem Zusatzbehälter (8) abführbar und in den Mischbehälter (2) überführbar ist, und/oder wobei
der Futtermischer eine Futterergänzungsmittel-Fördereinrichtung (21) mit einer Rohr- oder Schlauchleitung (23) aufweist, die sich vom Zusatzbehälter (8) in den Mischbehälter (2) hinein oder bis in einen Bereich oberhalb eines Querförderbandes des Futtermischers erstreckt.

2. Futtermischer nach Anspruch 1, **dadurch gekennzeichnet, dass** die Futterergänzungsmittel-Wiegeeinrichtung (10) eine Messungenauigkeit von weniger als 0,5 kg hat.

3. Futtermischer nach Anspruch 1 oder 2, **dadurch gekennzeichnet, dass** der Zusatzbehälter (8) getrennt vom Mischbehälter (2) angeordnet ist, derart, dass das Gewicht des sich im Zusatzbehälter (8) befindenden Futterergänzungsmittels unabhängig vom Gewicht des sich im Mischbehälter (2) befindenden Futtermittels messbar ist.

4. Futtermischer nach einem der vorhergehenden Ansprüche, **dadurch gekennzeichnet, dass** der Zusatzbehälter (8) an einer die Futterergänzungsmittel-Wiegeeinrichtung (10) aufweisenden Halterung (11) befestigt ist, wobei die Futterergänzungsmittel-Wiegeeinrichtung (10) Messelemente umfasst, die eine vom Füllgewicht des Zusatzbehälters (8) abhängige Verformung oder Belastung der Halterung (11) messen.

5. Futtermischer nach Anspruch 1, **dadurch gekennzeichnet, dass** die Verschließeinrichtung (14) im Bodenbereich des Zusatzbehälters (8) angeordnet ist, derart, dass das Futterergänzungsmittel durch Schwerkraft aus dem Zusatzbehälter (8) ausströmen kann.

6. Futtermischer nach Anspruch 1, **dadurch gekennzeichnet, dass** sich die Rohr- oder Schlauchleitung (23) vom Zusatzbehälter (8) über einen oberen Rand des Mischbehälters (2) erstreckt oder in eine seitliche Wandöffnung des Mischbehälters (2) mündet.

7. Futtermischer nach Anspruch 1 oder 6, **dadurch gekennzeichnet, dass** die Futterergänzungsmittel-Fördereinrichtung (21) eine Förderschnecke (22) oder einen Druckluft- oder Saugförderer zum Fördern des Futterergänzungsmittels vom Zusatzbehälter (8) in den Mischbehälter (2) oder in den Bereich oberhalb des Querförderbandes umfasst.

8. Futtermischer nach einem der Ansprüche 1, 6 oder 7, **dadurch gekennzeichnet, dass** die Futterergänzungsmittel-Fördereinrichtung (21) in Abhängigkeit der von der Futterergänzungsmittel-Wiegeeinrichtung (10) erzeugten Gewichtssignale deaktivierbar ist.

9. Futtermischer nach einem der vorhergehenden Ansprüche, **dadurch gekennzeichnet, dass** der Zusatzbehälter (8) an einer Beladevorrichtung des Futtermischers befestigt ist, wobei das Futterergänzungsmittel vor dem Eintritt des Grundfutters in den Mischbehälter (2) auf das Grundfutter aufbringbar ist.

10. Futtermischer nach einem der Ansprüche 1, oder 5 bis 10, **dadurch gekennzeichnet, dass** die elektronische Steuereinrichtung mit einer Anzeigeeinrichtung (25) zum Anzeigen des Gewichts des sich im Mischbehälter (2) befindenden Futtermittels und des sich im Zusatzbehälter (8) befindenden Futterergänzungsmittels in Verbindung steht.

11. Futtermischer nach einem der vorhergehenden Ansprüche, **dadurch gekennzeichnet, dass** mehrere Zusatzbehälter (8) über den Umfang des Mischbehälters (2) verteilt angeordnet sind.
